# EUROPÄISCHE PATENTSCHRIFT

(11) **EP 3 809 255 B1**
(45) Veröffentlichungstag und Bekanntmachung des Hinweises auf die Patenterteilung: **01.07.2026**
(21) Anmeldenummer: 19000471.3
(22) Anmeldetag: 16.10.2019
(51) Int. Cl.: G06F 3/12

(54) **RASTERSTRUKTUR FALZKANTE**
SPECIAL RASTERIZING PATTERN AT FOLDING EDGE
RASTÉRIZATION SPECIALE AU BORD DE PLIAGE

(43) Veröffentlichungstag der Anmeldung: 21.04.2021
(73) Patentinhaber: Heidelberger Druckmaschinen AG, 69115 Heidelberg (DE)
(72) Erfinder: Schenk, Stefan, 69257 Wiesenbach (DE)

(56) Entgegenhaltungen:
- JP-A- 2006 209 427
- US-A1- 2010 165 407
- US-A1- 2011 299 869

## Beschreibung

Die Erfindung betrifft ein Verfahren zur Herstellung von Druckprodukten, wobei für bestimmte Bereiche des Druckproduktes ein spezifisch auf eine Weiterverarbeitung angepasstes Rastermuster angewandt wird.

Die Erfindung liegt im technischen Gebiet des Rasterprozesses für Druckprodukte.

Im Rahmen einer Weiterverarbeitung von Druckprodukten kann diese dazu führen, dass das Druckbild in Form von aufgebrachter Farbe oder Tinte beschädigt wird. Dies betrifft insbesondere aber nicht ausschließlich das Falzen in einer Falzmaschine. Hierbei passiert es häufig, dass an den Stellen, an den sich die Falzkanten befinden, die aufgebrachte Tinte oder Farbe während des Falzvorgangs aufbricht. Besonders tritt dieses Phänomen bei der Verwendung UV-trocknender Tinten im Inkjetbereich auf. Normalerweise würde im Stand der Technik bei einem derartigen Bruchverhalten der aufgetragenen Farbschicht versucht, auf eine andere Farbe mit einem besseren Bruchverhalten auszuweichen. Bei Inkjet-Druckmaschinen sind die verwendeten Tinten jedoch oft so spezifisch von den Tinten- und Maschinenherstellern auf die Verwendung in einer bestimmten Inkjet-Druckmaschine angepasst, dass der Einsatz von Alternativtinten nicht möglich oder zumindest vom jeweiligen Hersteller nicht gewünscht ist. Ein Wechsel des Tintentypes z.B. von UV-Tinte zu wasserbasierter Tinte ist zudem auf Grund von verfahrenstechnischen Eigenheiten oft nicht möglich. Die einzige Lösung besteht dann darin, zu einem anderen Tintenhersteller zu wechseln mit einer anderen Tintenmischung die weniger bruchanfällig ist. Dies ist jedoch meist mit hohem Aufwand verbunden und bei gleichen Tintentypen, wie UV oder wasserbasiert, sind die technischen Rahmenbedingungen für die Tintenformulierung beim Inkjetdruck eher strikt.

Die US Patentanmeldung US 2010 0165407 Al beschreibt Systeme und Verfahren, die eine Druckautomatisierung ermöglichen. Z.B. wird ein Template-Generator verwendet, um eine Seitenvorlage mit geeigneten Rändern, Rinnen und Seitenmarkierungen vorzubereiten, damit Designer Inhalte in einem Drucklayout für einen beabsichtigtes Falzmuster entwerfen, erstellen und verwalten können.

JP 2006 209427 A beschreibt ein Verfahren, um das Brechen und Abblättern von Toner auf Druckerzeugnissen beim anschließenden Falzvorgang zu verhindern. Dazu wird vorgeschlagen, beim Druckvorgang im zu faltenden Bereich und dessen Umgebung die Farbdichte zu verringern.

US 2011/0299869 A1 beschreibt die Verwendung von besonderen Mustern in Falzbereichen auf einem Bedruckstoff im Tonerdruck. Es wird unter anderem beschrieben, in den Falzbereichen weniger Toner zu verwenden.

Aufgrund dieser im Stand der Technik bekannten Probleme wird daher ein Verfahren bevorzugt, bei welchem die bereits verwendeten Tinten trotz Bruchverhaltens an den Falzkanten weiter verwendet werden können.

Die Aufgabe der vorliegenden Erfindung besteht somit darin, ein solches Verfahren zur Weiterverarbeitung von Druckprodukten mit wesentlich verbessertem Bruchverhalten der verwendeten Tinten zu offenbaren.

Gelöst wird diese Aufgabe durch ein Verfahren gemäß Anspruch 1. Kern des erfindungsgemäßen Verfahrens ist somit der, dass die im Voraus bereits bekannten Bereiche, welche später eine Weiterverarbeitung unterliegen, in der Vorstufe im Rasterprozess spezifisch so angepasst werden, dass durch das veränderte Raster in diesen Bereichen eine Beschädigung der aufgebrachten Farbschichten in der Weiterverarbeitung verhindert oder zumindest vermindert wird. Durch dieses veränderte Rastermuster wird natürlich eine geringfügige Verminderung der Druckqualität in diesen Bereichen in Kauf genommen, welche aber durch das verminderte Aufbrechen der aufgebrachten Farbschichten im Endeffekt mehr als ausgeglichen wird.

Vorteilhafte und daher bevorzugte Weiterbildungen des Verfahrens ergeben sich aus dem zugehörigen Unteranspruch sowie aus der Beschreibung mit den zugehörigen Zeichnungen.

Eine bevorzugte Weiterbildung des erfindungsgemäßen Verfahrens ist dabei, dass die Weiterverarbeitungseinheit in den betreffenden Bereichen des Druckproduktes Prozesse des Falzens, Schneidens, Stanzens, Lochens oder Heftens durchführt. Am wichtigsten ist das erfindungsgemäße Verfahren bei einer Weiterverarbeitung in Form eines Falzprozesses in einer Falzmaschine. Dennoch sind auch andere Weiterverarbeitungen, insbesondere Schneiden, Stanzen, Lochen oder Heften ebenfalls für das Phänomen des Brechens der Farbschichten anfällig, womit das erfindungsgemäße Verfahren auch für diese Arten der Weiterverarbeitung eingesetzt werden kann.

Ein Merkmal des erfindungsgemäßen Verfahrens ist dabei, dass als verändertes Rastermuster eine bruchoptimierte Punktstruktur verwendet wird. Die erfindungsgemäß veränderte Art des Rastermusters hat sich als besonders effizient hinsichtlich einer Optimierung des Bruchverhaltens an Falzkanten erwiesen.

Ein weiteres Merkmal des erfindungsgemäßen Verfahrens ist dabei, dass durch Aufbringen des veränderten Rastermusters in den Bereichen des Druckproduktes die von der Weiterverarbeitungseinheit beeinflusst werden entweder keine zusammenhängenden Farbflächen entstehen oder definierte Bruchstellen erzeugt werden, was eine Beschädigung der aufgebrachten Farbschichten vermindert. Um das entsprechende optimierte Bruchverhalten der Farbschichten in den betroffenen Bereichen sicherzustellen, sind zusammenhängende Farbflächen möglichst zu vermeiden. Dies wird durch die verwendete Punktstruktur sichergestellt. Falls dies nicht möglich ist, werden bestimmte Sollbruchstellen in den Farbschichten erzeugt. Beides führt zu einer entsprechenden Verminderung des Aufbrechens der entsprechenden aufgebrachten Farbschichten.

Ein weiteres Merkmal des erfindungsgemäßen Verfahrens ist dabei, dass es sich bei Druckmaschine um eine Inkjet-Druckmaschine handelt, welche das veränderte Rastermuster mittels verschiedener Tintentropfengrößen realisiert, mittels dessen eine unerwünschte, veränderte Farbgebung minimiert wird. Das Phänomen des Aufbrechens der aufgebrachten Farbschichten stritt besonders häufig bei UV-Tinten in einer Inkjet-Druckmaschine auf. Inkjet-Druckmaschinen können zudem abhängig von den verwendeten Druckköpfen verschiedene Tintentropfengrößen realisieren. Dieses Merkmal kann genutzt werden, um das veränderte Rastermuster mittels der verschiedenen Tintentropfengrößen zu optimieren und damit nicht nur das optimierte Bruchverhalten sicherzustellen, sondern auch eine in den betroffenen Bereichen verschlechterte Farbgebung möglichst zu minimieren.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Figuren zeigen:
- Figur 1:: ein Beispiel eines Workflowsystems in welchem das erfindungsgemäße Verfahren eingesetzt wird
- Figur 2:: ein Beispiel eines Falzmusters
- Figur 3a, 3b:: zwei Beispiele eines erfindungsgemäßen Rasters für die Falzkanten
- Figur 4:: schematisch den Ablauf des erfindungsgemäßen Verfahrens

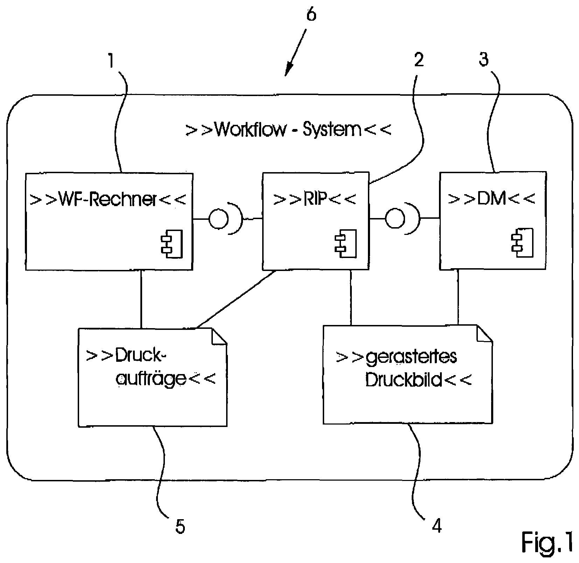

Das erfindungsgemäße Verfahren wird in einer Inkjet-Druckmaschine 3, welche sich in einem bestimmten Workflow-System 6 befindet, eingesetzt. Ein solches Workflow-System ist beispielhaft in Figur 1 dargestellt. Das Workflow-System 6 läuft auf einem oder mehreren Rechnern 1, über den die entsprechenden Druckaufträge 5 bearbeitet werden. Ein Druckauftrag 5, welcher auf einer Inkjet-Druckmaschine 3 gedruckt werden soll, wird dabei durch einen Raster-Image-Prozessor 2 gerastert und von dort werden die gerasterten Druckbilder 4 an die Inkjet-Druckmaschine 3 zum entsprechenden Fortdruck weitergeleitet.

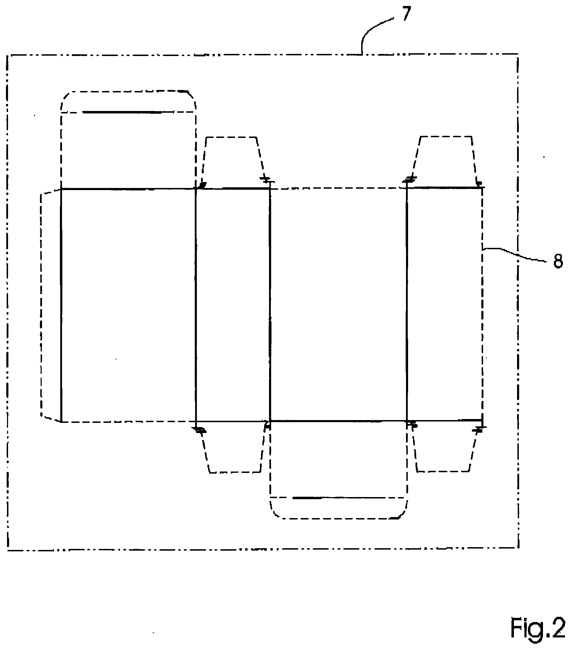

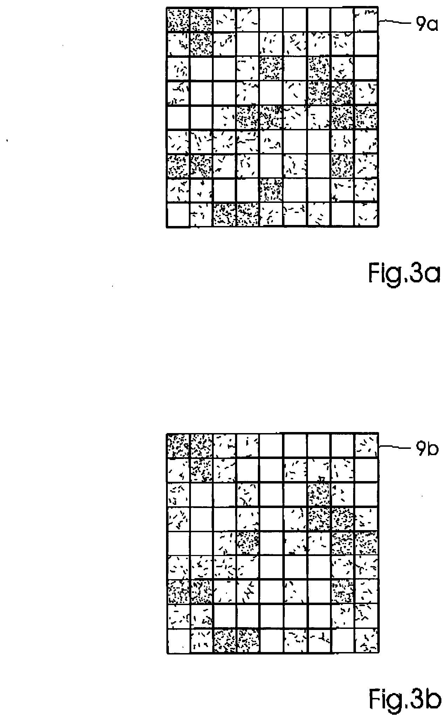

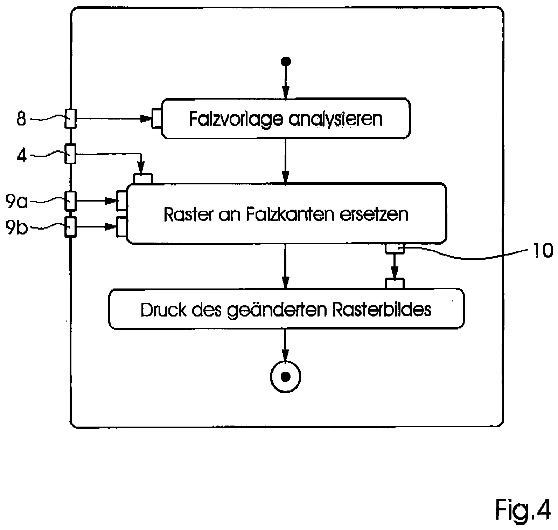

In Figur 4 ist der Ablauf des erfindungsgemäßen Verfahrens in einer bevorzugten Ausführungsform schematisch dargestellt. In diesem wird dabei als Weiterverarbeitungsprozess ein Falzprozess beschrieben. Prinzipiell ist das erfindungsgemäße Verfahren allerdings auf viele weitere Weiterverarbeitungsprozessanwendbar. Zuerst wird nun die digital, meist als PDF vorliegende Falzvorlage vom Rechner analysiert. Bei der Positionierung des Contents werden in der Regel auch Hilfslinien, entweder als Sonderfarbe im PDF oder als separate Schachtelkontur, z.B. als CF2, oder über die Ausschießsoftware, definiert, welche die Falzkanten 8 beschreiben. Figur 2 zeigt ein Beispiel einer solchen Falzvorlage mit den Hilfslinien für die Falzkanten 8 auf dem Drucksubstrat 7. Diese Information wird mit den ausgeschossenen Druckbogen, bzw. Segmenten des Druckbogens / -substrates 7 bis zur Rastergenerierung im Raster-Image-Prozessor 2 transportiert. Dort wird an den markierten Stellen der Falzkanten 8 eine Sonderbehandlung angewendet, welche eine bruchoptimierte Punktstruktur 9a, 9b einfügt. In Figur 3 werden zwei Beispiele für Rasterbilder mit solchen bruchoptimierten Punktstrukturen 9a, 9b dargestellt.

Dabei gibt es zwei Möglichkeiten für die Auswahl der Punktstruktur:
a) Auswahl einer Struktur ohne Berücksichtigung der Farbabweichung
b) Auswahl einer Struktur unter Berücksichtigung der Farbabweichung und einer maximalen Schichtdicke im Falzbereich Mittels der zweiten Variante wird ein durch die abweichende Rasterung entstehender Farbfehler durch die Anwendung der passenden Punktstruktur, abhängig von Raster und Tonwert, minimiert. Diese Variante wird vor allem gewählt, wenn die Farbwerte der bedruckten Falzkanten 8 für das Endprodukt eine wichtige Rolle spielen. Die Berücksichtigung der Farbabweichung durch das veränderte Raster 9a, 9b schränkt allerdings die Effektivität der Bruchoptimierung etwas ein. Falls somit die Bruchoptimierung Priorität genießen soll, wird die erste Variante bevorzugt.

Durch die Kenntnis der späteren Falzkanten 8 kann somit an den betreffenden Linien ein spezielles Raster 9a, 9b gemäß Figur 3a und 3b eingesetzt werden, wobei das Raster 9a die Generierung von zusammenhängenden Flächen unterbindet, wie in Figur 3a dargestellt, oder wo das Raster 9b mit definierten Bruchstellen, gemäß Figur 3b, versehen ist. Damit wird im derart bruchoptimierten gerasterten Druckbild 10 das unkontrollierte Aufbrechen der Farbe vermindert, sodass unter Umständen kein Wechsel von Tinte und gegebenenfalls Drucksystem 3 notwendig wird. Durch den Einsatz der verschiedenen Tropfengrößen im Inkjet kann zusätzlich der entstehende Farbfehler minimiert werden.

### Bezugszeichenliste

- 1: Rechner
- 2: Raster-Image-Prozessor (RIP)
- 3: Inkjet-Druckmaschine
- 4: gerastertes Druckbild
- 5: Druckauftrag
- 6: Workflowsystem
- 7: Drucksubstrat
- 8: Falzkante
- 9a: spezielles Rasterbild ohne zusammenhängende Flächen
- 9b: spezielles Rasterbild mit definierter Bruchstelle
- 10: gerastertes Druckbild mit bruchoptimiertem Raster

## Patentansprüche

1. Verfahren zur Herstellung von Druckprodukten, wobei Druckbilder (4) für die Druckprodukte in einer Druckvorstufe gerastert, von einer Druckmaschine (3) gedruckt und von einer Weiterverarbeitungseinheit bearbeitet werden,
wobei ein Raster-Image-Prozessor (2) der Druckvorstufe für die Bereiche des Druckproduktes, die von der Weiterverarbeitungseinheit beeinflusst werden, das Rastermuster (9a, 9b) so verändert, dass eine Beschädigung der beim Druck aufgebrachten Farbschichten bei der Bearbeitung in der Weiterverarbeitungseinheit vermindert wird, wobei als verändertes Rastermuster (9a, 9b) eine bruchoptimierte Punktstruktur verwendet wird und
wobei durch Aufbringen des veränderten Rastermusters (9a, 9b) in den Bereichen des Druckproduktes, die von der Weiterverarbeitungseinheit beeinflusst werden, entweder keine zusammenhängenden Farbflächen (9a) entstehen oder definierte Bruchstellen (9b) erzeugt werden, was eine Beschädigung der aufgebrachten Farbschichten vermindert,
**dadurch gekennzeichnet,**
**dass** es sich bei Druckmaschine (3) um eine Inkjet-Druckmaschine (3) handelt, welche das veränderte Rastermuster (9a, 9b) mittels verschiedener Tintentropfengrößen realisiert, mittels dessen eine unerwünschte, veränderte Farbgebung minimiert wird.

2. Verfahren nach Anspruch 1,
wobei die Weiterverarbeitungseinheit in den betreffenden Bereichen des Druckproduktes Prozesse des Falzens, Schneidens, Stanzens, Lochens oder Heftens durchführt.

## Claims

1. Method for producing printed products, wherein printed images (4) for the printed products are screened in a prepress stage, printed by a printing press (3) and processed by a further processing unit, wherein a Raster Image Processor (2) of the prepress stage changes the screen pattern (9a, 9b) for the areas of the printed product which are influenced by the further processing unit in such a way that damage to the ink films applied during printing is reduced during processing in the further processing unit, a fracture-optimized dot structure being used as the modified screen pattern (9a, 9b), and
wherein by applying the modified screen pattern (9a, 9b) in the areas of the printed product which are influenced by the further processing unit, either no contiguous areas of color (9a) are produced or defined fracture points (9b) are produced, which reduces damage to the applied ink films,
**characterized in that**
the printing press (3) is an inkjet printing press (3) which implements the modified screen pattern (9a, 9b) by means of different ink droplet sizes, which minimizes an undesired, modified inking.

2. Method according to claim 1,
wherein the further processing unit carries out folding, cutting, die-cutting, hole-punching or stitching processes in the relevant areas of the printed product.

## Revendications

1. Procédé de fabrication de produits imprimés, dans lequel les images d'impression (4) destinées aux produits imprimés sont tramées lors d'une phase de prépresse, imprimées par une machine à imprimer (3) et traitées par une unité de traitement ultérieur, sachant qu'un processeur d'image tramée (2) en phase de prépresse modifie le motif de trame (9a, 9b) - pour les zones du produit imprimé influencées par l'unité de traitement ultérieur - de telle sorte qu'un endommagement des couches d'encre appliquées lors de l'impression soit réduit lors du traitement dans l'unité de traitement ultérieur, sachant qu'une structure de points optimisée en termes de rupture est utilisée comme motif de trame modifié (9a, 9b) ; et
dans lequel l'application du motif de trame modifié (9a, 9b) dans les zones du produit imprimé concernées par l'unité de traitement ultérieur a pour effet soit d'éviter la formation de surfaces de couleur continues (9a), soit de créer des points de rupture définis (9b), ce qui réduit les risques d'endommagement des couches d'encre appliquées,
**caractérisé en ce que**
la machine à imprimer (3) est une machine d'impression à jet d'encre (3) qui reproduit le motif de trame modifié (9a, 9b) à l'aide de gouttes d'encre de différentes tailles, ce qui permet de minimiser toute variation indésirable de la coloration.

2. Procédé selon la revendication 1,
dans lequel l'unité de traitement ultérieur effectue, dans les zones concernées du produit imprimé, des opérations de pliage, de découpe, de poinçonnage, de perforation ou d'agrafage.
